# EUROPEAN PATENT APPLICATION

(11) **EP 4 613 567 A2**
(43) Date of publication of application: **10.09.2025**
(21) Application number: 25191245.7
(22) Date of filing: 30.09.2020
(51) Int. Cl.: B60R 19/56

(54) **SKIRT SYSTEM FOR LOWERING THE AERODYNAMIC RESISTANCE OF LAND VEHICLES**

(30) Priority: 01.10.2019 US 201962909200 P
(62) Divisional of application: 20800295.6
(71) Applicant: Ayupov, Almaz, Kazan, 420103 (RU)
(72) Inventor: Ayupov, Almaz, Kazan, 420103 (RU)
(74) Representative: Zanardelli, Davide

(57) **Abstract**

A side skirt device for reducing the aerodynamic resistance of a land vehicle is provided. The land vehicle includes a vehicle body and vehicle sides. The land vehicle is equipped with a side underride guard. The side underride guard is disposed adjacent one of the vehicle sides and below the vehicle body. The side skirt device includes a skirt panel that is configured to be removably attached to an exterior side of the side underride protection guard. Thee skirt panel is configured to extend downwardly from near a bottom of the vehicle body to a predetermined height above a ground surface. The skirt panel is configured to extend over an exterior side of the side underride guard to cover the side underride guard to direct airflow around vehicle components and reduce aerodynamic resistance.

## Description

### CROSS-REFERENCE TO RELATED APPLICATIONS

This application claims benefit under 35 U.S.C. § 119(e) of Provisional Application No. 62/909,200 filed October 1, 2019, the disclosure of which is incorporated by reference in its entirety.

### FIELD

This present application relates to methods and devices for reducing the aerodynamic resistance of large land vehicles such as trucks or trailers.

### BACKGROUND

It is well known that aerodynamic aids such as skirts designed to streamline the undercarriage of large vehicles such as a trailer or truck reduce the aerodynamic resistance of a vehicle when moving, and therefore save fuel and emissions. Many removable skirt attachments have been designed to streamline the undercarriage of vehicles, and several designs have been widely deployed in North America. However, skirts have not achieved significant utilization on certain types of vehicles. Many vehicles, which are more common outside of North America, are not compatible with typical skirt designs because they do not have exposed cross member beams on the bottom of the vehicle to mount them to, or feature side impact guards which interfere with skirt installation. Some skirt designs have been developed to specifically accommodate such vehicles, but they do not provide enough aerodynamic benefit or are too expensive to generate an acceptable return on investment through fuel use reductions, and consequently have not been widely adopted. Side underride guards also interfere with the installation of typical skirts.

### SUMMARY

In one aspect of the present invention, a side skirt device for reducing the aerodynamic resistance of a land vehicle is provided. The land vehicle includes a vehicle body and vehicle sides. The land vehicle is equipped with a side underride guard. The side underride guard is disposed adjacent one of the vehicle sides and below the vehicle body. The side skirt device includes a skirt panel that is configured to be removably attached to an exterior side of the side underride protection guard. The skirt panel is configured to extend downwardly from near a bottom of the vehicle body to a predetermined height above a ground surface. The skirt panel is configured to extend over an exterior side of the side underride guard to cover the side underride guard to direct airflow around vehicle components and reduce aerodynamic resistance.

In another aspect of the present invention, a system for reducing the aerodynamic resistance of a land vehicle is provided. The land vehicle includes a vehicle body and vehicle sides. The system includes a side underride guard disposed adjacent one of the vehicle sides and below the vehicle body. The system further includes a skirt panel that is removably attached to an exterior side of the side underride protection guard. The skirt panel extends downwardly from near a bottom of the vehicle body to a predetermined height above a ground surface. The skirt panel extends over an exterior side of the side underride guard to cover the side underride guard to direct airflow around vehicle components and reduce aerodynamic resistance.

In another aspect of the present invention, a side skirt device for reducing the aerodynamic resistance of a land vehicle is provided. The land vehicle includes a vehicle body and vehicle sides. The land vehicle is equipped with opposing vehicle structural beams. The vehicle structural beams are parallel to the vehicle sides and disposed at a predetermined distance from the vehicle sides and below the vehicle body. The side skirt device includes a skirt support cross bar. The skirt support cross bar is configured to be removably attached to the bottom or top of the vehicle structural beams. The skirt support cross bar extends between the vehicle sides and terminates near the vehicle sides. The side skirt device further includes a vertically oriented support structure. The skirt support cross bar supports and is removably attached to the vertically oriented support structure. The vertically oriented support structure extends below or above or both above and below the skirt support cross bar at or near an end of the skirt support cross bar. The side skirt device further includes a skirt panel. The skirt panel is removably attached to the vertically oriented support structure. The skirt panel extends downwardly from near the bottom of the vehicle body to a predetermined height above a ground surface. The skirt panel is configured to extend over the exterior sides of the vertically oriented support structure to cover the vertically oriented support structure and direct airflow around vehicle components and reduce aerodynamic resistance.

Other aspects of the disclosed skirt system for lowering the aerodynamic resistance of land vehicles will become apparent from the following detailed description, the accompanying drawings and the appended claims.

### BRIEF DESCRIPTION OF THE DRAWINGS

The invention will become more apparent by reading the following detailed description in conjunction with the accompanying drawings, wherein like reference numerals refer to like parts throughout the drawings and in which:
FIG. 1 is a side view of a combination vehicle comprised of a truck and trailer with skirt devices made in accordance with this invention disposed on both the truck and trailer.
FIG. 2 is a side view of the same combination vehicle illustrated in FIG. 1 without any skirt devices, to illustrate integrated structures that are obscured by the skirt devices in FIG 1 such as side underride guards and chassis rails, which are fundamental to attaching the present invention to the vehicle.
FIG. 3 is a bottom view of the combination vehicle illustrated in FIG. 1, illustrating the opposing skirt panels and their position generally adjacent the vehicle sides.
FIG. 4 is a partial side view showing a typical installation of the device.
FIG. 5A is a partial sectional view taken along line I--I of FIG. 4.
FIG. 5B is an enlarge view of a portion of FIG. 5A.
FIG. 6 is a partial sectional view taken along line II--II of FIG. 4.
FIG. 7 is the same view as FIG. 6, showing the device in an altered position where it is rotated upward.
FIG. 8 is a series of partial rear views of the device installed on a vehicle, showing different modes of deflection from impact forces of varying direction.
FIG. 9 is a series of partial rear views of an alternate installation of the device on a vehicle, showing different modes of deflection from impact forces of varying direction.
FIG. 10 is a partial rear view of an alternate installation of the device on a vehicle with an alternate type of side under-ride guard.
FIG. 11 is a top plan view of skirt extension supports.
FIG. 12 is a partial side view showing an installation of the device with an integrated side underride guard.
FIG. 13 is a partial side view showing an alternate installation of the device on a trailer with a sectional side underride guard.
FIG. 14 is a partial side view showing an alternate version of the skirt device that is mounted to vehicle chassis rails instead of side under-ride guards.
FIG. 15 is a partial top view of the alternate skirt device illustrated in FIG. 14, wherein different methods for attaching the device to the vehicle chassis rails are shown.
FIG. 16 is a partial rear view of the alternate skirt device illustrated in FIG. 14, wherein different methods for attaching and supporting the skirt panels are shown on each side.
FIG. 17 is a partial rear view of an alternate skirt device that is adapted to open to provide access to an integrated storage box.
FIG. 18 is a partial rear view of alternate skirt device that is adapted to open to provide access to vehicle components such as wheels.
FIG. 19 is a side view of a combination vehicle comprised of a truck and trailer with skirt devices that cover vehicle wheels disposed on both the truck and trailer in order to maximize aerodynamic efficiency.
FIG. 20 is a partial side view showing an alternate version of the skirt device that is mounted to tractor chassis rails.
FIG. 21 is a partial rear view of the alternate skirt device illustrated in FIG. 20, wherein the skirt is shown in an open position on one side.
FIG. 22 is a side view of a straight truck featuring an integrated cargo body with skirt devices made in accordance with this invention disposed thereon, to illustrate how the devices can be employed on a variety of different vehicle configurations.

### DETAILED DESCRIPTION

It will be readily understood that the components of the embodiments as generally described and illustrated in the figures herein, may be arranged and designed in a wide variety of different configurations in addition to the described example embodiments. Thus, the following more detailed description of the example embodiments, as represented in the figures, is not intended to limit the scope of the embodiments, as claimed, but is merely representative of example embodiments.

Furthermore, the described features, structures, or characteristics may be combined in any suitable manner in one or more embodiments. In the following description, numerous specific details are provided to give a thorough understanding of embodiments. One skilled in the relevant art will recognize, however, that the various embodiments can be practiced without one or more of the specific details, or with other methods, components, materials, etc. In other instances, well-known structures, materials, or operations are not shown or described in detail to avoid obfuscation. The following description is intended only by way of example, and simply illustrates certain example embodiments.

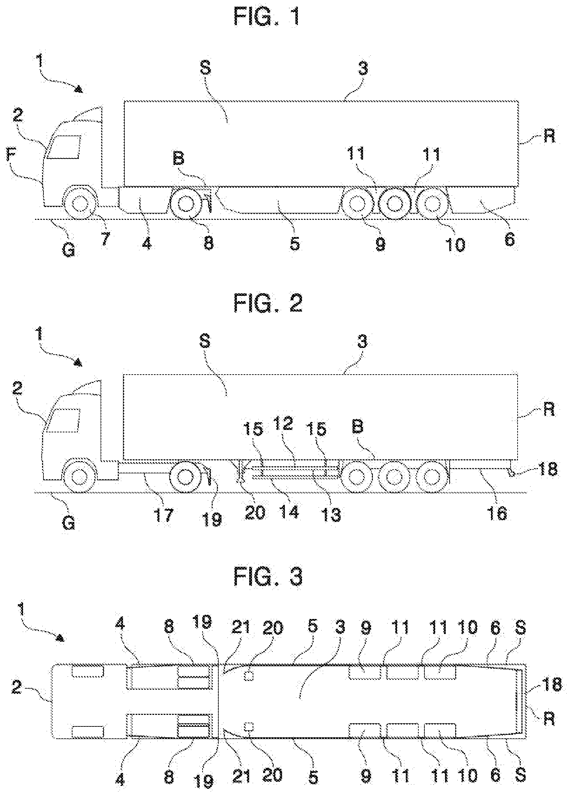

Referring now to the drawings, in FIG.1 there is shown a land vehicle 1 such as a combination tractor 2 and trailer 3. The tractor 2 defines the front F of the vehicle 1 and has a tractor skirt 4 disposed between a tractor front wheel 7 and a tractor rear wheel 8. The trailer 3 has a generally rectangular body for carrying cargo and defines the rear R of the vehicle 1. The trailer 3 has a side S and a bottom B disposed above a trailer front wheel 9 and a trailer rear wheel 10. A forward trailer skirt 5 is disposed in front of the trailer front wheel 9. Two wheel skirts 11 are each disposed in between adjacent trailer wheels, and a rearward trailer skirt 6 is disposed behind the trailer rear wheel 10. All of the skirt devices 5, 11, 6 and 4 are disposed below the bottom B of the trailer and above the ground G and together create a skirt system for reducing the aerodynamic resistance of the vehicle 1 when it moves. While the preferred embodiment discloses all of the skirt devices 4, 5, 11, and 6 on the vehicle 1, it is understood that each skirt device may be employed independently of the others on a vehicle, or any combination of the devices may be used.

For the purpose of comparison and to illustrate the components of the vehicle 1 that are relevant to the installation of the skirt system, FIG. 2 shows the same vehicle 1 shown in FIG. 1 without the skirt devices 4, 5, 11, and 6 installed. The tractor 2 has a tractor structural beam 17 which serves to distribute the weight of the tractor and trailer to its wheels, and a rearmost tractor corner 19 generally adjacent the vehicle sides which is typically a mud flap or related structure. The tractor structural beam 17 typically comprises opposing C shaped beams. The trailer 3 has a trailer structural beam 16 extending generally from trailer landing gear 20 to the trailer rear bumper 18. The trailer structural beam 16 typically comprises opposing I shaped beams although, alternatively, C shaped beams may also used. Mounted to the bottom B of the trailer 3 in front of its wheels and adjacent its side S is a side underride protection device (SUR) 12. The SUR 12 comprises an SUR top rail 13 and SUR lower rail 14 connected together and to the trailer by two or more SUR vertical supports 15. The SUR 12 is designed to prevent vehicles and pedestrians from entering the space under the trailer and potential serious harm. The SUR top rail 13 and/or the SUR lower rail 14 may be rectangular, square, round or any other suitable shape.

FIG.3 shows the bottom of the same vehicle 1 represented in FIG 1 to illustrate the position, shape and opposing nature of relevant vehicle components and the skirt devices 4, 5, 11, and 6. The tractor skirts 4 are shown with front edges angled inward relative to the vehicle to mate with the truck cab, and rear edges adjacent the corners of the tractor rear wheels 8. The forward trailer skirts 5 are shown generally in line with and adjacent to the side S of the trailer 3, but have an inward bend relative to the vehicle forward of the landing gear 20, which positions the front of forward trailer skirt 21 inward of the side S of the trailer 3 and in close proximity to the rearmost tractor corner 19. Wheel skirts 11 are shown generally in line with and adjacent to the side S of the trailer 3. Rearward trailer skirts 6 are shown with rear edges angled inward to mate with the trailer rear bumper 18, and forward edges adjacent the corners of the trailer rear wheels 10.

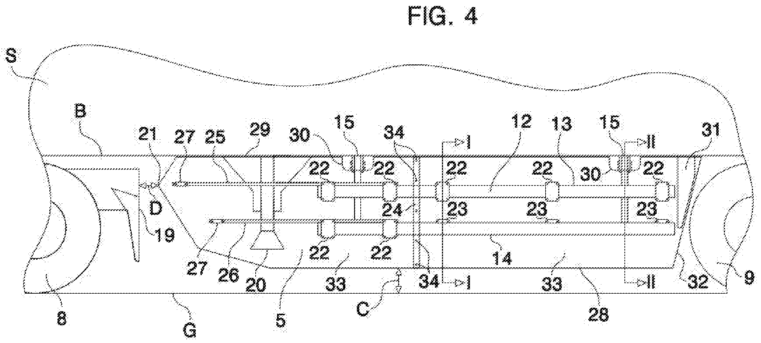

FIG. 4 shows a more detailed partial view of the forward trailer skirt 5 wherein the skirt panels 33 are shown with edges but are transparent to illustrate underlying features. Skirt panels 33 are preferably made from a flat sheet of a flexible and resilient material such as plastic or composite. Specifically, composite materials such as glass fiber reinforced thermoplastic sheets that are between .1 and .2 inches thick are generally preferred because they resist damage from impacts and deformation over long periods of time. In this preferred embodiment, the forward trailer skirt 5 is made from two skirt panels 33 that are joined at an overlap 24 by a plurality of removable fasteners 34 such as bolts. Using multiple panels in the skirt may be preferred to enable the cost effective replacement of individual panels if needed and to reduce shipping costs, but a single panel on each side of the trailer can also be used. The rear edge of forward trailer skirt 32 is shown adjacent the trailer front wheel 9 and is angled to cover the trailer splash guard 31. The front of the forward trailer skirt 21 defines a distance D to the rearmost tractor corner 19 that is preferably as small as possible to maximize aerodynamics while also providing enough clearance room for the tractor to articulate when turning. The skirt top edge 29 is in line with and in close proximity to the bottom of the trailer B, but is not connected to the bottom of the trailer B. The skirt bottom edge 28 defines a clearance distance C to the ground G which is preferably between 4 and 6 inches and is generally as small as possible to maximize aerodynamics while also providing enough clearance room for the skirt to avoid contacting uneven ground surfaces. The interior side of the skirt panels 33 mates against the exterior of the SUR top rail 13 and SUR lower rail 14 which positions the skirt panels 33 generally in the same plane as the side S of the trailer. The skirt panels 33 are removably attached to the SUR top rail 13 by one or more skirt SUR clamps 22 which each feature at least two removable fasteners such as a bolt oriented above and below the SUR top rail.

A skirt extension support 25 is removably attached to the SUR top rail 13 by one or more SUR clamps 22 and is oriented behind the skirt panel 33 and mates with the top of the SUR top rail 13. The skirt extension support 25 is preferably made of square metal tubing but other materials such as composite could be used. The forward tip of the skirt extension support 25 is attached to the skirt panel 33 by a skirt extension clamp 27 with one or more removable fasteners such as bolts. The skirt extension support 25 provides a structure to enable the skirt panel 33 to extend beyond the forward edge of the SUR 12 and preferably beyond the trailer landing gear 20 to minimize the distance D and maximize aerodynamic performance. However in some cases the skirt extension support 25 may not be compatible with vehicle geometry and may be omitted such that the front of forward trailer skirt 21 is near the front of the SUR 12. In the preferred embodiment shown, a second lower skirt extension support 26 is attached to the top of SUR lower rail 14 by one or more SUR clamps 22 to provide additional support for the skirt panel 33. Skirt restraints 23 are oriented on top of the SUR lower rail 14 and prevent the skirt panels from bending excessively in an outward direction (as shown in subsequent figures). Access cutouts 30 may be made in the panels 33 to enable access to trailer components such as the SUR vertical supports 15 as shown.

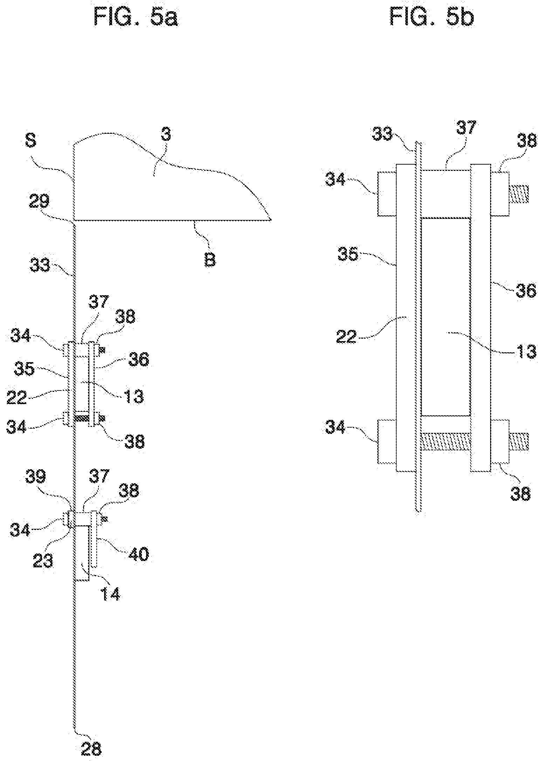

FIG. 5a shows a partial sectional view taken on line I--I of FIG. 4 to illustrate how the skirt panel 33 is removably attached to the SUR top rail 13 by the skirt SUR clamp 22, which is enlarged in FIG. 5b to clarify its features. An exterior clamp 35 disposed on the exterior of the skirt panel 33 and an interior clamp 36 disposed on the interior side of the SUR top rail 13 are preferably made from sheet metal. Fasteners 34 such as bolts pass through the exterior clamp 35, the skirt panel 33 and the interior clamp 36 and are secured by nuts 38 that when tightened securely clamp the panel to the SUR top rail 13. A clamp spacer 37 is positioned on the upper fastener 34 between the skirt panel 33 and the interior clamp 36 and positions the skirt clamp 22 on the top of the SUR top rail 13. The upper fastener 34 extends through the clamp spacer 37. The clamp spacer 37 also positions the interior clamp 36 at a predetermined offset distance from the skirt panel 33 that is preferably slightly longer than the thickness of the SUR top rail 13. The clamp spacer 37 may be comprised of a bushing or stack of flat metal washers whose quantity may be varied to adjust the offset distance to efficiently accommodate SUR top rails 13 of different thickness. The clamp spacer 37 may be substituted by the skirt extension support 25 so that the skirt extension support 25 is securely clamped to the SUR top rail 13.

To facilitate the efficient installation of the forward trailer skirt 5, the skirt SUR clamps 22 may be fastened to the panel 33 without the lower fastener before installation on the SUR. The skirt panels 33 can then be lifted and the skirt clamps 22 lowered onto the SUR top rail 13. The lower fasteners 34 can then be inserted in the exterior clamps 35 and secured with the lower nuts 38, which serve to firmly clamp the forward trailer skirt 5 to the SUR top rail 13. The nuts 38 may be permanently attached to the interior clamp 36 by welding or other means to enable the clamp to be tightened or loosened by turning the bolts 34 from the exterior side of the trailer in order to enhance the efficiency of installing or removing skirt panels.

FIG. 5a also shows the skirt restraint 23, which is comprised of a fastener 34 that passes through a washer plate 39, the panel 33, a clamp spacer 37, a panel restraint plate 40, and is secured by a nut 38. The panel restraint plate 40 passes behind the SUR lower rail and is preferably made of a flexible and resilient plastic or composite material. The skirt restraint 23 limits the degree to which the skirt bottom edge 28 can bend outwardly when pushed by aerodynamic forces and helps ensure that the skirt is aerodynamically stable at high speeds. The skirt restraint 23 is similar in design to the SUR clamp 22 but does not serve to clamp the skirt to the SUR lower rail 14. Like the skirt clamp 22, the skirt restraint 23 can be fastened to the panel before it is installed on the SUR to facilitate efficient installation.

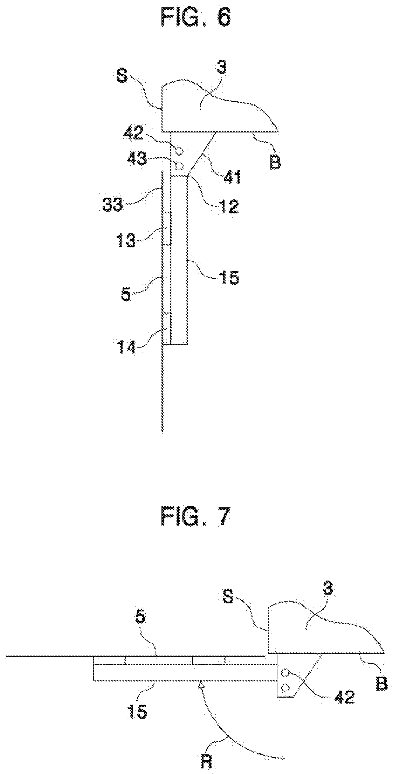

FIG. 6 shows a partial sectional view taken on line II--II of FIG. 4 to further illustrate features of a typical SUR 12 and the forward trailer skirt 5. The skirt panel 33 is disposed against the exterior of the SUR top rail 13 and SUR lower rail 14 which define its position generally in line with the side S of the trailer. The SUR top rail 13 and SUR lower rail 14 are attached to the vertical SUR support 15. The vertical SUR support 15 is attached to the vertical support bracket 41 and hence the bottom of the trailer B by a SUR pivot pin 42 extending through them. The SUR lock pin 43 extends through the vertical support bracket 41 and vertical SUR support 15 and secures the vertical SUR support 15 and hence the forward trailer skirt 5 in the operational vertical position. As shown in FIG. 7, when the SUR lock pins 43 are removed, the vertical SUR supports 15 and hence the entire forward trailer skirt 5 are free to rotate about the SUR pivot pins 42 to a new angle R or open position that allows operators to conveniently access the area underneath the trailer for maintenance or storage.

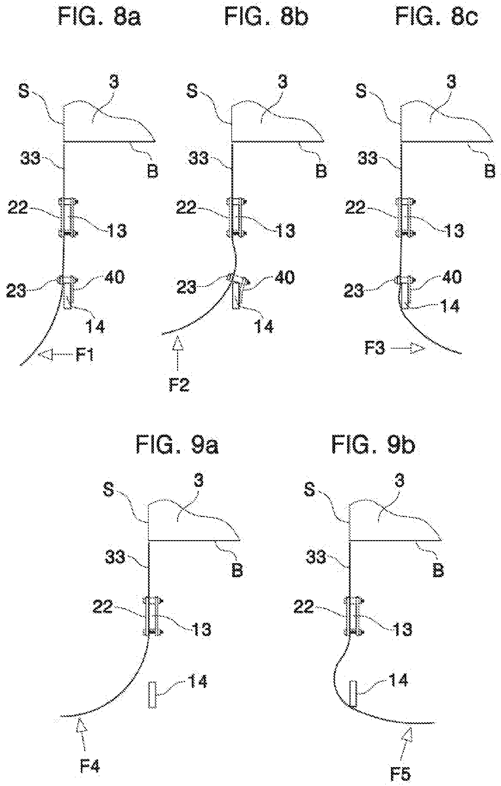

FIG. 8a, b, and c show examples of how the skirt panel 33 bends to deflect and absorb impact forces F1, F2 and F3 of varying direction when the skirt restraint 23 is present in order to prevent damage. In FIG. 8a force F1, which may be the result of aerodynamic pressure pushing the bottom of the skirt panel 33 from behind in an outward direction, causes the skirt panel 33 to bend outwardly. The skirt restraint 23 limits the amount of deflection in the skirt panel 33 because the panel restraint plate 40 is pushed against the SUR lower rail 14. The absence of any connection between skirt panel 33 and SUR lower rail 14 below the SUR lower rail 14 enables the panel 33 to bend with a larger radius than otherwise possible to minimize the stress concentration that could damage the skirt panel 33.

In FIG. 8b force F2, which may be the result of a ground impact, pushes the bottom of the skirt panel 33 upward from below the skirt panel 33 in an upward direction causing it to bend outwardly and upwardly. The skirt restraint 23 limits the amount of deflection in the skirt panel 33 because the panel restraint plate 40 is pushed against the SUR lower rail 14. In this example the panel restraint plate 40 is made of a flexible material and is shown bending to give the skirt panel 33 more freedom of motion. The absence of any connection limiting the upward vertical movement of the skirt panel 33 relative to the SUR lower rail 14 enables the skirt panel 33 to bend with a larger radius than otherwise possible to minimize the stress concentration that could damage the skirt panel 33.

In FIG. 8c force F3, which may be the result of a curb impact, pushes the bottom of the skirt panel 33 inward from outside the skirt panel 33 causing it to bend inwardly. The skirt restraint 23 limits the amount of deflection in the skirt panel 33 because the panel restraint plate 40 is pushed against the SUR lower rail 14. The absence of any connection between skirt panel 33 and SUR lower rail 14 below the SUR lower rail 14 enables the skirt panel 33 to bend with a larger radius than otherwise possible to minimize the stress concentration that could damage the skirt panel 33.

FIG 9a, and b show examples of how the skirt panel 33 bends to deflect and absorb impact forces Fl, F2 and F3 of varying direction when the skirt restraint 23 is not present in order to prevent damage. In FIG. 9a force F4, which may be the result of a ground impact while the vehicle is turning inwardly, pushes the bottom of the skirt panel 33 upward and from behind the skirt panel 33 causing it to bend outwardly. The absence of the skirt restraint 23 enables the skirt panel 33 to bend away from the SUR lower rail 14. The absence of any connection between skirt panel 33 and SUR lower rail 14 enables the skirt panel 33 to bend with a larger radius than otherwise possible to minimize the stress concentration that could damage the skirt panel 33.

In FIG. 9b force F5, which may be the result of a ground impact while the vehicle is turning outwardly, pushes the bottom of the skirt panel 33 upward and from outside the skirt panel 33 causing it to bend inwardly. The absence of the skirt restraint 23 enables the skirt panel 33 to bend away from the top of the SUR lower rail 14. The absence of any connection between skirt panel 33 and SUR lower rail 14 enables the skirt panel 33 to bend with a larger radius than otherwise possible to minimize the stress concentration that could damage the skirt panel 33.

FIG. 8 and 9 illustrate how the panel 33 can bend with a larger radius to minimize the stress concentration that could damage the skirt panel 33 when the skirt restraint 23 is not installed. However, the large defections possible when the skirt restraint 23 is not installed as shown in FIG 9a may not be desirable, as the panel may deflect outwardly from the vehicle towards other adjacent vehicles. The absence of skirt restraints 23 may also make the panel 33 aerodynamically unstable such that it flaps or oscillates at high speeds. Consequently, the placement of skirt restraints 23 along the skirt panel 33 horizontally may be strategic to maximize panel 33 flexibility where needed, and to provide stability where needed. Typically, flexibility is desirable in the center of the skirt panel where ground impacts may be more severe, and stability is desirable at the forward and trailing edges of the skirt panels 33. In some cases, skirt restraints 23 may not be needed at all. In any case, the skirt restraints 23 are designed to provide the maximum flexibility in skirt panels 33 while also providing any necessary limitation to the skirt panel 33 range of motion.

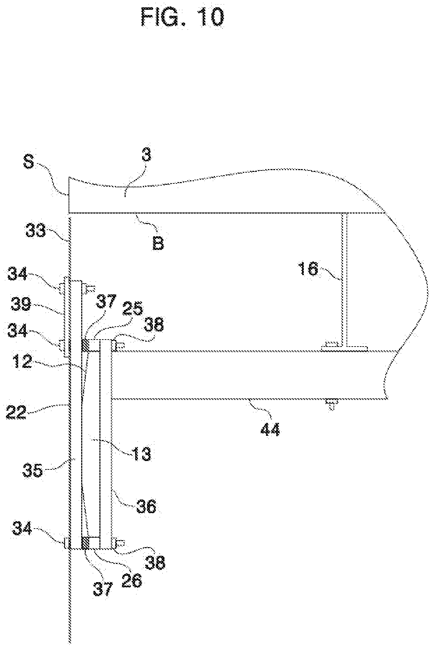

FIG. 10 shows a partial sectional view of a different style of SUR 12 and a modification to the skirt SUR clamp 22 in order to illustrate an alternative method for attaching the skirt panel 33 to the SUR 12. In this example, there is no SUR lower rail and the SUR top rail 13 is vertically taller than in previous examples and has an uneven outer surface. The SUR top rail 13 is connected to the trailer structural beam by a SUR horizontal support 44 instead of being connected to the bottom B of the trailer directly by a SUR vertical support 15. In order to accommodate this type of SUR 12, the interior clamp 36 and exterior clamp 35 are elongated vertically and made of a stiffer material such as square metal tubes. The skirt panel 33 is disposed against the outside of the exterior clamp 35 in this example to conceal the larger exterior clamp 35 and insure it does not induce aerodynamic drag. The interior clamp 36 and exterior clamp 35 are connected by at least two removable fasteners 34 such as bolts positioned at the top and bottom of the interior clamp 36.

When tightened, nuts 38 serve to clamp the interior clamp 36 and exterior clamp 35 firmly to the SUR top rail 13. A clamp spacer 37 is positioned on the fastener 34 between the exterior clamp 33 and the interior clamp 36 and positions the skirt clamp 22 on the top of the SUR top rail 13. The clamp spacer 37 also positions the interior clamp 36 at a predetermined offset distance from the exterior clamp 35 that is preferably slightly longer than the thickness of the SUR top rail 13. The clamp spacer 37 may be comprised of a stack of flat metal washers whose quantity may be varied to adjust the offset distance to efficiently accommodate SUR top rails 13 of different thickness. The clamp spacer 37 may be augmented or substituted by the skirt extension support 25 or lower skirt extension support 26 so that they are also securely clamped to the SUR top rail 13. To facilitate the efficient installation of the forward trailer skirt 5, the skirt SUR clamps 22 may be fastened to the panel 33 without the lower fastener 34 before installation. The skirt panel 33 can then be lifted and the skirt clamps 22 lowered onto the SUR top rail 13. The lower fastener 34 can then be inserted in the exterior clamp 35 and secured with the lower nut 38 which serves to firmly clamp the skirt to the SUR top rail 13.

The nuts 38 may be permanently secured to the interior clamp 36 by welding or other means to enable the clamp to be tightened or loosened by turning the bolts 34 from the exterior side of the trailer in order to enhance the efficiency of installing or removing skirt panels. In the preferred embodiment shown, a washer plate 39 clamps the skirt panel 33 to the exterior clamp 35, which extends above the interior clamp 36, to facilitate an additional fastener 34 at the top of the interior clamp 35 to more securely connect the panel 33 to the skirt SUR clamp 22. The skirt panel 33 may or may not be connected to the SUR clamp 22 at the bottom fastener 34. When connected to the skirt panel 33, the bottom fastener 34 may serve a similar purpose as the skirt restraint 23 in limiting the outward deflection of the skirt panel 33. In some cases it may be desirable to for the skirt panel 33 to not be connected to the SUR clamp 22 at the bottom fastener 34 to enable the panel 33 to bend with a larger radius than otherwise possible to minimize the stress concentration that could damage the skirt panel 33. The method for attaching the skirt to the SUR shown in FIG. 10 can also accommodate SURs with a SUR lower rail 14 or more than two rails by clamping to more than one SUR rail at a time, and in general can be adapted to accommodate a wide variety of SUR equipment.

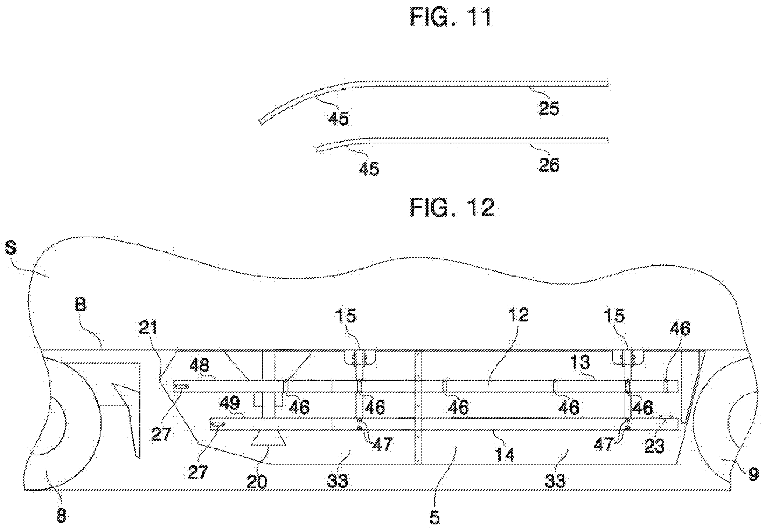

FIG. 11 shows a top view of the skirt extension support 25 and lower skirt extension support 26 to illustrate the skirt extension curve 45 which is oriented towards the center of the vehicle. The skirt extension curve 45 bends the attached forward skirt panel 33 (not shown) inward to deflect air flow around the panel and improve aerodynamic performance. The skirt extension curve 45 is preferably the same bend radius on skirt extension support 25 and lower skirt extension support 26 so that the forward skirt panel 33 also has a consistent bend radius. The skirt extension support 25 is preferably a different length than the lower skirt extension support 26 so that the two supports have different natural frequency vibration modes, and therefore do not have a tendency to oscillate together and cause aerodynamic instability. The skirt extension support 25 and lower skirt extension support 26 are preferably made of corrosion resistant square or rectangular metal tubing.

FIG. 12 shows a partial view of a preferred embodiment of a forward trailer skirt 5 where a modified SUR 12 is integrated in the skirt system. In FIG. 12 the skirt panels 33 are shown with edges but are transparent to illustrate underlying features. The SUR 12 features a SUR top rail extension 48 and SUR lower rail extension 49 which extend the SUR top rail 13 and SUR lower rail 14 forward and preferably past the trailer landing gear 20. The SUR top rail extension 48 and SUR lower rail extension 49 may either be an extension of the SUR top rail 13 and SUR lower rail 14 or separate removable components. The SUR top rail extension 48 and SUR lower rail extension 49 replace the skirt extension support 25 and lower skirt extension support 26 previously described and provide the same function of supporting the attached forward skirt panel 33 to improve aerodynamic performance and may similarly bend inward to inset the front of forward trailer skirt 21 from the side S of the vehicle. Skirt extension clamps 27 attach the skirt panel 33 to the front of the SUR top rail extension 48 and SUR lower rail extension 49.

In this preferred embodiment, skirt SUR clamps 22 are replaced by skirt SUR attachments 46 which are comprised of a washer plate on the exterior of the panel and removable fasteners such as bolts that attach the skirt panels 33 directly to the SUR top rail 13 and may be used to also connect the SUR vertical supports 15. Panel fastener cut outs 47 provide access to fasteners that connect the SUR vertical supports 15 to the SUR lower rail 14 while also preventing the panels 33 from being directly attached to the SUR lower rail in order to allow the panel 33 to bend with a larger radius than otherwise possible to minimize the stress concentration that could damage the skirt panel 33. A skirt restraint 23 may be positioned at the trailing end of the SUR lower rail 14 to prevent the skirt panel 33 from deflecting outward excessively or from oscillating due to aerodynamic instability. In general, integrating the design of the SUR 12 and the forward trailer skirt 5 may be beneficial to reduce the cost and weight of the combined system when installed on new trailers or trailers that do not already have SUR devices, and may provide safety benefits by improving the ability of the SUR to absorb and deflect impacts.

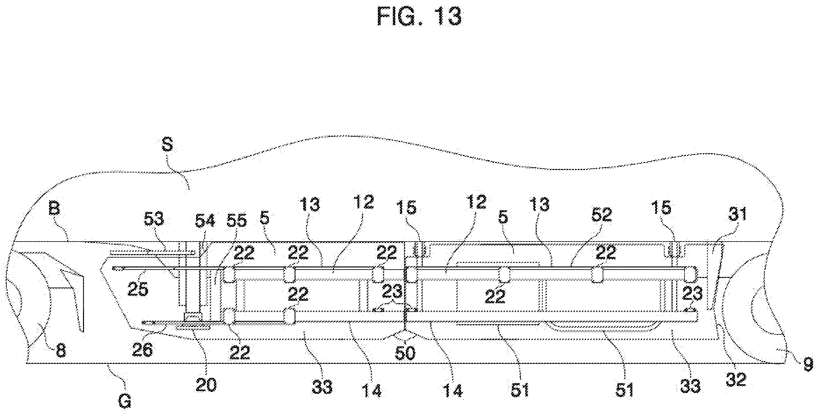

FIG. 13 shows a partial view of a forward trailer skirt 5 installed on a trailer with two different SUR 12 systems to illustrate how the skirt systems can be adapted to accommodate different vehicle configurations. In FIG. 13, the skirt panels 33 are shown with edges but are transparent to illustrate underlying features. In this example a trailer has a rearward SUR 12 with SUR vertical supports 15 that enable the SUR 12 to open as previously described so that under trailer equipment 51 such as a tire carrier and storage box can be easily accessed. A forward SUR 12 is attached to the trailer structural beam 17 similar to the SUR shown in FIG. 10 and does not open. Consequently, the forward skirt panel 33 and rearward skirt panel 33 are not attached so that the rearward skirt panel 33 can open independently with the rearward SUR 12. Panel deflection ramps 50 are made in the panels 33 where they meet to prevent sharp corners from getting caught on uneven ground surfaces. Both the forward and rearward skirt panels 33 are attached to the SUR top rails 13 by one or more skirt SUR clamps 22. In this example three SUR clamps 22 clamp the skirt extension support 25 to the SUR top rail 13 so that forces that may be applied to the skirt extension support 25 are distributed along a longer portion of the SUR top rail. Two SUR clamps 22 clamp the lower skirt extension support 26 to the SUR lower rail 14 on the bottom of the SUR lower rail 14 to avoid interference with the SUR vertical connector 55, which is present on some SUR systems and connects the SUR top rail 13 and SUR lower rail 14 at the front of the SUR.

In this example four SUR clamps 22 clamp a SUR stiffener 52 to the SUR top rail 13 of the rearward SUR 12. The SUR stiffener 52 is similar to the skirt extension support 25 and provides additional rigidity to the SUR top rail 13. In some preferred embodiments not shown the skirt panel 33 is fastened directly to the SUR stiffener 52 only, and the SUR stiffener 52 is removably fastened to the SUR top rail, to help facilitate the efficient installation of the skirt panel. In this example skirt restraints 23 are positioned near the front and rear of SUR lower rails 14 to reduce the outward deflection of the skirt panels 33 and prevent aerodynamic instability, but are not present in the center of the SUR lower rail to allow the skirt panel 33 more freedom to bend and resist damage. A landing gear crank panel cut 54 is shown in the forward skirt panel 33 to provide access to a landing gear crank 53 that is used to operate the trailer landing gear 20. In this example, an alternate configuration for the rear edge of the forward trailer skirt 32 is shown that reduces the distance from the lower rear corner of the skirt panel 33 to the tire 9 in order to improve aerodynamic performance.

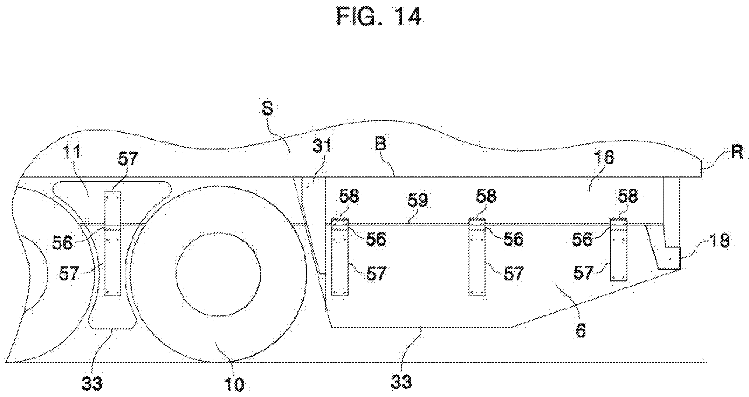

FIG. 14 shows a partial side view of a rearward trailer skirt 6 installed behind the trailer rear wheels 10 and a wheel skirt 11 installed between the trailer wheels. In FIG. 14 the skirt panels 33 are shown with edges but are transparent to illustrate underlying features. The skirt panels 33 are attached to one or more vertical skirt stabilizers 57 which are attached to skirt support cross bars 56 that are clamped to the trailer beam flange 59 of the trailer structural beam 16 with skirt support cross bar clamps 58. The wheel skirt 11 has vertical skirt stabilizers 57 attached above and below the skirt support cross bar 56. Vertical skirt stabilizers 57 improve the aerodynamic stability of the skirt panels 33 and may be made of a flexible and resilient material such as plastic or composite to absorb impacts and resist damage while allowing the skirt panels 33 to flex. The skirt panel 33 of the rearward trailer skirt 6 has a leading edge in close proximity to the trailer rear wheel 10 and covers the trailer splash guard 31 to maximize aerodynamic performance. The skirt panel 33 of the rearward trailer skirt 6 has a trailing edge in close proximity to the trailer rear R and covers the trailer rear bumper 18 to maximize aerodynamic performance.

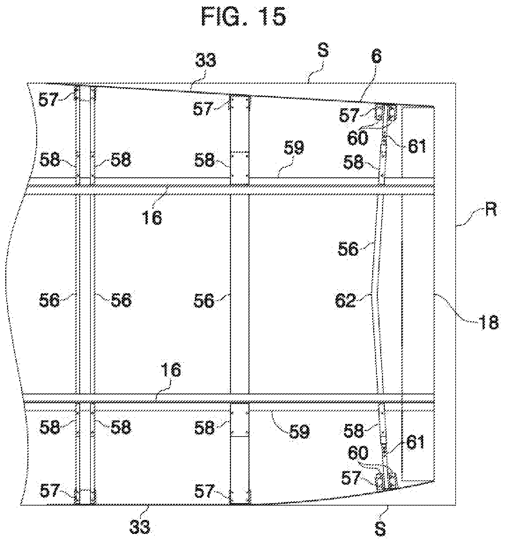

FIG. 15 shows a partial top view of a rearward trailer skirt 6 and illustrates different methods of attaching the rearward trailer skirt 6 to the opposing trailer structural beams 16 with skirt support cross bars 56. In general skirt support cross bars 56 extend across the width of the vehicle and are connected to the bottom of the opposing trailer structural beams 16 preferably by clamping means to provide adjustability and so that no holes are required in the trailer structural beams 16. In the present example, opposing skirt support cross bar clamps 58 extend over the trailer beam flanges 59 and are each secured by at least one fastener such as a bolt passing through the skirt support cross bar clamps 58 and the skirt support cross bars 56 that when tightened securely clamp the skirt support cross bars 56 to the trailer. Skirt support cross bars 56 support and position the skirt panels 33. Vertical support stabilizers 57 preferably attach the skirt panels 33 to the skirt support cross bars 56 as shown. The length of the skirt support cross bars 56 may be varied to position the skirt panel 33 relative to the side of the trailer S. The skirt panel 33 at the top of the illustration is positioned at a consistent angle to the side S of the trailer so that its leading edge is adjacent the side S of the trailer and its trailing edge is inset and adjacent the trailer rear bumper 18. To illustrate an alternative method, the skirt panel 33 at the bottom of the illustration is flush with the side of the trailer and then bends inward to position its trailing edge inset and adjacent the trailer rear bumper 18. The skirt panels 33 are generally made to taper inward at the rear R of the vehicle to reduce the size of the aerodynamic wake and therefore improve aerodynamic performance. In this example the forward sections of the skirt panels 33 are supported by a pair of skirt support cross bars 56 connected to one vertical support stabilizer on each side. In this configuration the skirt support cross bars 56 may be made of square metal tubing and can be the same tubing used to make skirt extension supports 25. Two skirt support cross bars 56 may be used to provide additional strength and stiffness.

In this example the middle sections of the skirt panels 33 are supported by a single skirt support cross bar 56 connected to one vertical support stabilizer 57 on each side. In this configuration the skirt support cross bars 56 may be made of rectangular metal tubing or a composite material and may be designed to flex and absorb impacts. In this example the rearward sections of the skirt panels 33 are supported by a single skirt support cross bar 56 that is connected to one vertical support stabilizer 57 on each side by a pair of opposing vertical stabilizer brackets 60. The vertical stabilizer brackets 60 are preferably made of sheet metal that is bent to a right angle, and have at least one fastener hole in each face to enable horizontally oriented fasteners to pass though the skirt support cross bars 56 and vertically oriented fasteners to connect the vertical stabilizer 57. In this configuration the rear skirt support cross bar 56 features a cross bar bend 62 at its center point which positions each side of the skirt support cross bar 56 at a right angle to the panels 33. The rear skirt support cross bar 56 also features length adjusters 61 at both ends that allow the length of the skirt support cross bar 56 to be easily adjusted to position the panels 33. The length adjusters 61 are shown made of square metal tubing sized to fit inside the skirt support cross bar 56 and feature multiple fastener holes that can be selectively mated with fastener holes in the skirt support cross bar 56 and the skirt support cross bar clamp 58 to adjust length. Each of the three different configurations of skirt support cross bars 56 illustrated in FIG. 15 provide advantages for specific vehicle configurations and applications and are shown used together in this example for illustrative purposes only.

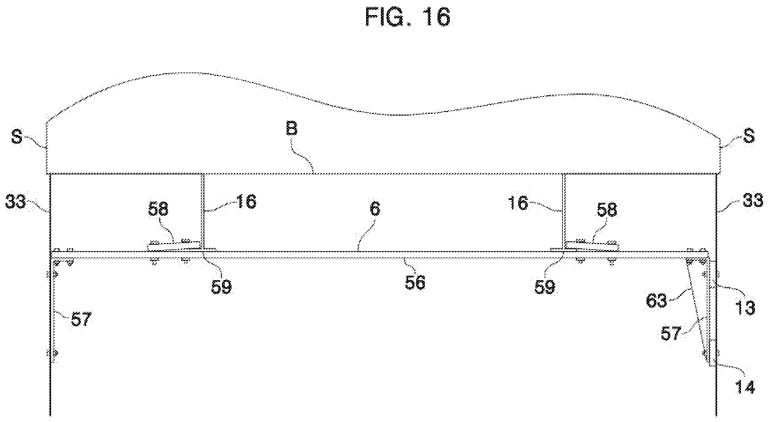

FIG. 16 shows a partial rear view of a rearward trailer skirt 6 to further illustrate attaching the skirt support cross bar 56 to the trailer structural beams 16 by clamping opposing cross bar clamps 58 to the trailer beam flanges 59 with vertically oriented fasteners such as bolts. Opposing vertical skirt stabilizers 57 are removably attached to each end of the skirt support cross bar 56 and skirt panels 33 are removably attached to the vertical skirt stabilizers 57. In this example the vertical skirt stabilizer 57 on the left side is intended to be flexible to absorb impacts and may be made of sheet metal with a 90 degree bend. The vertical skirt stabilizer 57 on the right side incorporates a vertical skirt stabilizer flange 63 that serves to stiffen the skirt stabilizer 57. This stiff skirt stabilizer 57 may be used to attach a SUR top rail 13 and a SUR lower rail 14 between the skirt stabilizer 57 and the skirt panel 33, so that the skirt assembly may also serve the purpose of a SUR safety device. Each of the two different configurations of skirt stabilizers 57 illustrated in FIG. 16 provide advantages for different applications and are shown used together in this example for illustrative purposes only.

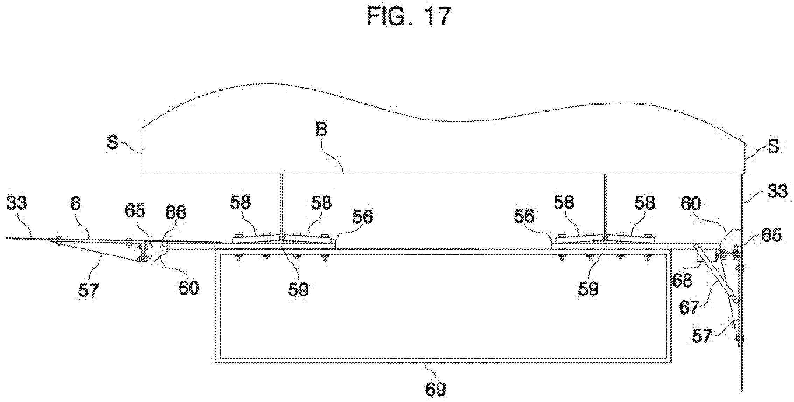

FIG. 17 shows a partial rear view of a rearward trailer skirt 6 that is adapted to open and provide access to underbody components or an integrated storage box 69. In this example the skirt support cross bar 56 is divided into two opposing sections, each supporting one side of the rearward trailer skirt 6. Each skirt support cross bar 56 is attached to the trailer beam flange 59 with two opposing skirt support cross bar clamps 58. Vertically oriented fasteners such as bolts extend through the skirt support cross bar clamp 58 and skirt support cross bar 56 and the top side of the integrated storage box 69 and into nuts which when tightened firmly clamp the rearward trailer skirt 6 and integrated storage box 69 to the vehicle. The integrated storage box 69 can be an open frame adapted to carry spare tires or pallets, or may be a sealed container with access doors for carrying smaller items, or may be omitted entirely without affecting the functionality of the rearward trailer skirt 6. On the left side of the illustration, the skirt panel 33 is shown in an open position.

The skirt panel 33 is bolted to a vertical support stabilizer 57 which is bolted to two vertical stabilizer brackets 60 disposed in an opposing fashion on either side of the skirt support cross bar 56. The vertical stabilizer brackets 60 are connected to the skirt support cross bar 56 by a rotation pin 65 which acts as a pivot point allowing the skirt panel to rotate and open upwardly. A lock pin 66 passes through the vertical stabilizer brackets 60 and the skirt support cross bar 56. The lock pin 65 is easily removable and can be used to hold the skirt panel 33 in an open position as shown, or can be placed through an alternate set of holes in the vertical stabilizer brackets 60 to lock the skirt panel in a vertical closed position. On the right side of the illustration, the skirt panel 33 is shown in a closed position and components are added to make opening and closing the panel 33 more efficient. A spring 67 such as a pressurized gas spring is connected to the skirt support cross bar 56 and the vertical support stabilizer 57 and can extend to hold the panel 33 in an open position. A latch 68 is attached to the skirt support cross bar 56 and serves to lock the vertical support stabilizer 57 and thus the panel 33 in a closed position. Preferably the latch 68 has a release button or mechanism on the exterior of the skirt panel 33, so that the panel 33 can be easily opened, and then returned to a closed and locked position by pushing it down.

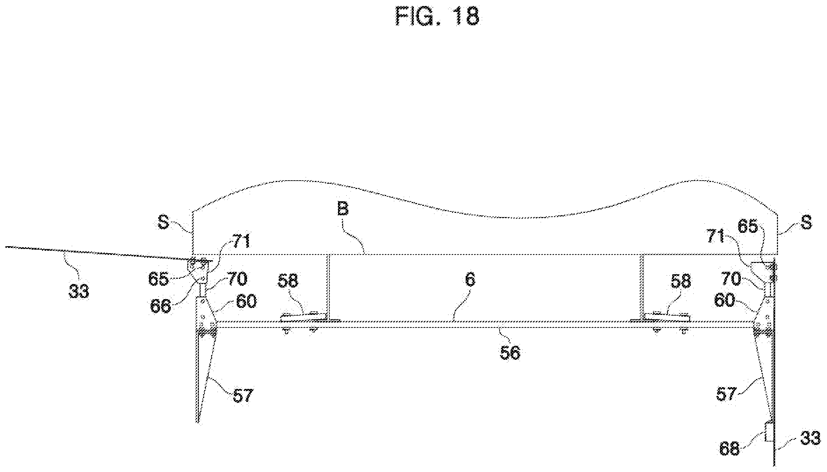

FIG. 18 shows a partial rear view of a rearward trailer skirt 6 that is adapted to open by rotating on an elevated pivot point to provide enhanced access to underbody components or full access to covered wheels. In this example opposing vertical stabilizer brackets 60 are removably attached, preferably by two bolts, to either end of the skirt support cross bar 56. The vertical stabilizer brackets 60 are modified to attach, preferably by two bolts, a vertical extension 70, and also serve to attach the vertical skirt stabilizer 57. The vertical extensions 70 connect panel rotation brackets 71 with rotation pins 65. The panel rotation brackets 71 are similar to vertical stabilizer brackets 60 and are disposed in an opposing fashion on either side of the vertical extensions 70. The panel rotation brackets 71 are removably attached, preferably by 4 opposing bolts, to each skirt panel 33. On the left side of the illustration, the skirt panel 33 is shown in an open position. Unlike previous examples, the vertical stabilizer brackets 60 and vertical skirt stabilizers 57 do not rotate with the panel 33. The panels and panel rotation brackets 71 rotate upward about the rotation pins 65. A lock pin 66 passes through the panel rotation brackets 71 and the vertical extension 70. The lock pin 65 is easily removable and can be used to hold the skirt panel 33 in an open position as shown, or can be placed through an alternate set of holes in the panel rotation brackets 71 to lock the skirt panel in a vertical closed position. On the right side of the illustration, the skirt panel 33 is shown in a closed position and components are added to make opening and closing the panel 33 more efficient. A latch 68 is attached to the skirt panel 33 and serves to lock the vertical support stabilizer 57 and thus the panel 33 in a closed position. Preferably the latch 68 has a release button or mechanism on the exterior of the skirt panel 33, so that the panel 33 can be easily opened, and then returned to a closed and locked position by pushing it down. A spring may be integrated in the system as previously demonstrated to hold the panel 33 in an open position but is not shown in FIG 18.

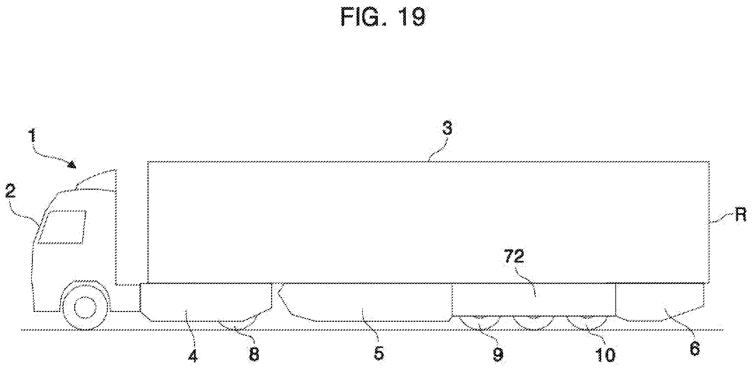

FIG. 19 shows a side view of a vehicle 1 featuring a trailer wheel cover skirt 72 and a tractor skirt 4 that is modified to cover the tractor wheel 8, both of which serve to further reduce the aerodynamic resistance of the vehicle 1 when moving, and may employ the skirt panel attachment and opening system illustrated in FIG. 18. The skirt panel attachment and opening system illustrated in FIG. 18 enables skirt panels to cover wheels because the wheels are fully accessible for maintenance when the skirt panels are in an open position. Skirt support cross bars 56 and associated components of the system (not shown in FIG 19) may be positioned directly in front of, behind, and in between vehicle wheels to support skirt panels that cover wheels.

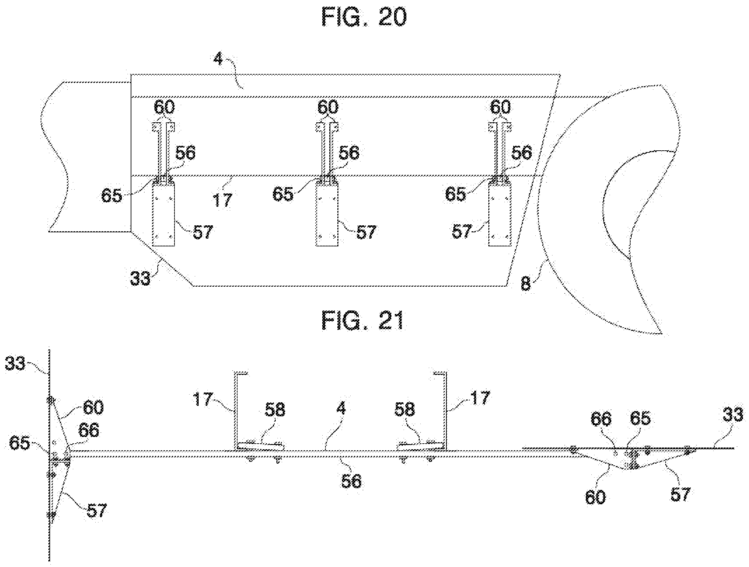

FIG. 20 shows a partial side view of tractor skirt 4 to illustrate preferred embodiments of the invention related skirt installations on tractors. In FIG. 20 the skirt panels 33 are shown with edges but are transparent to illustrate underlying features. The skirt panel 33 is attached to one or more vertical skirt stabilizers 57 as well as modified vertical support brackets 60. The vertical support brackets 60 are taller than those previously illustrated for trailers and include fastening points for attachment to the skirt panel 33. The fastening points on the vertical support brackets 60 provide support to the upper portion of the skirt panels 33. This extra support may be required on some vehicles to prevent aerodynamic instability and excessive deflection in the panel 33, because the bottom of the trailer structural beam 17 and therefore the skirt support cross bars 56 are positioned lower relative to the top of the skirt panel 33. As in prior examples, a pair of opposing vertical support brackets 60 are attached by removable fasteners such as bolts to the top of each vertical skirt stabilizer 57, and are connected to the skirt support cross bar 56 by a removable fasteners such as a rotation pin 65.

FIG. 21 shows a partial rear view of the tractor skirt 4 shown in FIG. 20, which is adapted to open and provide access to underbody components. In this example the skirt support cross bar 56 is attached to the opposing tractor structural beams 17 (which are typically C shaped) with two opposing skirt support cross bar clamps 58 that are positioned on the inside of the tractor structural beams 17 in order to overlap the flanges on the bottom of the tractor structural beams 17. On the right side of the illustration, the skirt panel 33 is shown in an open position. The vertical stabilizer brackets 60 are connected to the skirt support cross bar 56 by a rotation pin 65 which acts as a pivot point allowing the skirt panel to rotate and open upwardly. A lock pin 66 passes through the vertical stabilizer brackets 60 and the skirt support cross bar 56.

The lock pin 66 is easily removable and can be used to hold the skirt panel 33 in an open position as shown on the right side of the illustration, or can be placed through an alternate set of holes in the vertical stabilizer brackets 60 to lock the skirt panel in a vertical closed position as shown on the left side of the illustration. As previously demonstrated, components (not shown in this illustration) may be added to the tractor skirt 4 to make opening and closing the panel 33 more efficient, such a spring to hold the panel 33 in an open position or a latch to lock the panel 33 in a closed position. The skirt support system demonstrated in figure 18 may also be employed on a tractor skirt 4 so that the panel may cover the wheels or to provide improved access to underbody components. In some cases, it may be preferable to clamp the skirt support cross bars 56 to the top of the tractor structural beams 17 to move the point of skirt panel 33 rotation upward, so that the panel may cover the wheels or to provide improved access to underbody components.

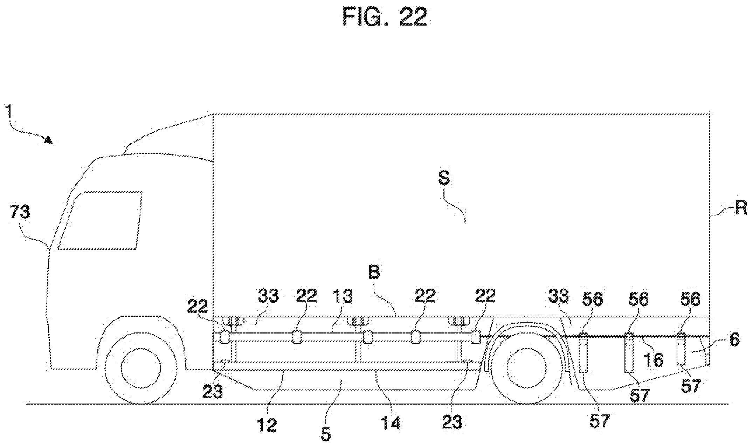

FIG. 22 shows a side view of a vehicle 1 such as a straight box truck 73 featuring skirt devices made in accordance with this invention. In FIG. 22 the skirt panels 33 are shown with edges but are transparent to illustrate underlying features. The box truck 73 has a SUR 12 with a SUR top rail 13 and SUR lower rail 14 as well as a structural beam below the bottom B of the cargo container. Consequently, a forward trailer skirt 5 and a rearward trailer skirt 6 are easily adapted for utilization on the straight box truck 73. FIG 22 helps to illustrate that the different trailer skirt systems and methods for attaching them to vehicles described herein can be used interchangeably on different parts of vehicles and can be used on vehicles of various types and configurations including but not limited to tractors, trailers, straight box trucks, flatbed trucks and trailers, tank trucks and trailers, container chassis trailers etc. The examples set forth in this disclosure are not intended to limit the scope of the invention.

In general, a device for reducing vehicle aerodynamic resistance disposed on the bottom of a vehicle having side underride guards or frame rails or both, when made in accordance with this invention, comprises a system of opposing skirt sheets that are removably attached to the side underride guard, or to the frame rails via one or more skirt support cross beams. Each skirt sheet having a top edge adjacent, but not attached to, the bottom of the vehicle, and a bottom edge disposed at a predetermined height above the ground. The skirt sheets are generally in the same plane as the sides of the vehicle, but may be angled or curved inward towards the center of the vehicle at the leading or trailing edge of the skirt sheets. One or more attachment clamps connect the opposed sheets to the exterior of a side underride guard when it is present on a vehicle. When a side underride guard is not present, the skirt sheets are connected to the vehicle by one or more load bearing skirt support cross beams of a predetermined size and flexibility which clamp to the bottom of the frame rails and extend toward the side of the vehicle in order to position the opposed flat sheets. Vertical support struts may be connected to the skirt support cross beams and the opposed skirt sheets to add support to the skirt sheets. The skirt sheets may be mounted either in front, behind, in between, or in front of the wheels of the vehicle. The presence of the skirt sheets direct the airflow around the rear wheels, axle components, rear impact guard, and other vehicle components, to reduce the aerodynamic resistance of the vehicle when moving.

The skirt system described above provides optimized drag reduction while using a minimal amount of material. Consequently weight and costs are minimized and fuel savings are maximized to produce an improved return on investment. The device is mounted to either the side underride guard or the chassis rails of the vehicle, or a combination of both. Consequently it is not necessary to attach the device to the exposed cross member beams frequently used to support the bottom of cargo boxes, like typical side skirts. This enables the device to be mounted on vehicles that do not have exposed cross member beams or that have atypical beams, which are often incompatible with typical skirt designs.

The present device utilizes and incorporates the structure of side underride guards when they are present on a vehicle. By using the structure provided by side underride guards, the device requires less of the mounting and supporting structure required by typical skirts. Many side underride guards are designed to open upwardly and provide access to other truck components. Some skirts may be adapted to cover side underride guards, but prevent them from opening. Because the present device can be mounted to the side underride guard only, and not the bottom of the trailer, it can easily be adapted to open with the side underride guard to enable access to other truck components. The device can also be adapted to open when mounted to the chassis rails of a vehicle. The ability to mount the device to both side underride guards and chassis rails enables it to be easily installed on a wider range of applicable vehicles. It also enables skirting to be installed in different sections of a vehicle where side underride guards may not be present to maximize aerodynamic performance. The improved aerodynamic performance of the device when compared to past designs for skirt attachments is also due to an extension structure that is attached to the front of the side underride guard. The extension diverts more air flow around the outside of the vehicle and prevents air flow from entering the space behind the skirt and inducing aerodynamic drag on vehicle components. The extension covers common vehicle features such as landing struts, while insuring that the panel does not interfere with operating the landing strut deployment crank mechanism.

Aerodynamic performance is also enhanced by the device through a flexible and resilient design that enables the clearance between the bottom of the skirt and the ground to be minimized. Past side skirt aerodynamic attachments and experimental research has clearly demonstrated that drag reduction is significantly improved by minimizing ground clearance and consequently the air flow that can pass underneath the skirt to impact vehicle components. However, minimizing ground clearance can cause damage to skirts, because irregular road surfaces such as rail-road crossings will impact the skirt more often if it is lower to the ground. Because the present device is constructed of durable and flexible materials, and is not rigidly connected to the vehicle near the ground where impacts are common, it has numerous degrees of freedom and can bend to absorb impacts from the ground or side, and return to its original position without damage. Furthermore the device is easily packaged and shipped, can be easily mounted on trailers and trucks of different geometries and construction, requires no welding or drilling in the vehicle when mounting, resists damage, and can be easily repaired with replacement parts.

Although various embodiments of the skirt system for lowering the aerodynamic resistance of land vehicles have been shown and described, modifications may occur to those skilled in the art upon reading the specification. The present application includes such modifications and is limited only by the scope of the claims. Moreover, in the following claims, the terms "a", "an", "first," "second," and "third," etc. are used merely as labels, and are not intended to impose numerical requirements on their objects or order of execution on their acts.

## Claims

1. A side skirt device for reducing the aerodynamic resistance of a land vehicle (1), wherein the land vehicle (1) includes a vehicle body and vehicle sides (S), wherein the land vehicle (1) is equipped with opposing vehicle structural beams (16; 17), wherein the vehicle structural beams (16; 17) are parallel to the vehicle sides (S) and disposed at a predetermined distance from the vehicle sides (S) and below the vehicle body, wherein the side skirt device comprises:
a skirt support cross bar (56), wherein the skirt support cross bar (56) is configured to be removably attached to the bottom or top of the vehicle structural beams (16; 17), wherein the skirt support cross bar (56) extends between the vehicle sides (S) and terminates near the vehicle sides (S);
a vertically oriented support structure (57), wherein the skirt support cross bar (56) supports and is removably attached to the vertically oriented support structure (57), wherein the vertically oriented support structure (57) extends below or above or both above and below the skirt support cross bar (56) at or near an end of the skirt support cross bar (56);
a skirt panel (33), wherein the skirt panel (33) is removably attached to the vertically oriented support structure (57), wherein the skirt panel (33) extends downwardly from near the bottom (B) of the vehicle body to a predetermined height above a ground surface (G), wherein the skirt panel (33) is configured to extend over the exterior sides of the vertically oriented support structure (57) to cover the vertically oriented support structure (57) and direct airflow around vehicle components and reduce aerodynamic resistance;
**characterized in that** the side skirt device further comprises a pivot pin (42; 65), wherein the pivot pin (42; 65) is provided in the vertically oriented support structure (57), wherein the skirt panel (33) can rotate upwardly about the pivot pin (42; 65) to enable access to vehicle components.

2. The side skirt device as set forth in claim 1 further comprising:
a clamp (58), wherein the skirt support cross bar (56) is configured to be removably attached to at least one of the structural beams (16; 17) by the clamp (58) without altering the structural beam (16; 17); and a storage structure (69), wherein the storage structure (69) is removably attached to the structural beam (16; 17) by the clamp (58) without altering the structural beam (16; 17).

3. The side skirt device as set forth in claim 1, wherein the length of the skirt support cross bar (56) is adjustable.

4. The side skirt device as set forth in claim 1 further comprising a panel rotation bracket (71), wherein the vertically oriented support structure (57) comprises a vertical extension (70), wherein the vertical extension (70) is removably attached to the skirt support cross bar (56) above the skirt support cross bar (56), wherein the panel rotation bracket (71) is removably attached to the skirt panel (33) and to the vertical extension (70) by a removable fastener, wherein the removable fastener defines a pivot point to enable the skirt panel (33) to rotate upwardly to access vehicle components.

5. A side skirt device for reducing the aerodynamic resistance of a land vehicle (1), wherein the land vehicle (1) includes a vehicle body and vehicle sides (S), wherein the land vehicle (1) is equipped with opposing vehicle structural beams (16; 17), wherein the vehicle structural beams (16; 17) are parallel to the vehicle sides (S) and disposed at a predetermined distance from the vehicle sides (S) and below the vehicle body, wherein the side skirt device comprises:
a skirt support cross bar (56), wherein the skirt support cross bar (56) is configured to be removably attached to the bottom or top of the vehicle structural beams (16; 17), wherein the skirt support cross bar (56) extends between the vehicle sides (S) and terminates near the vehicle sides (S);
a vertically oriented support structure (57), wherein the skirt support cross bar (56) supports and is removably attached to the vertically oriented support structure (57), wherein the vertically oriented support structure (57) extends below or above or both above and below the skirt support cross bar (56) at or near an end of the skirt support cross bar (56);
a skirt panel (33), wherein the skirt panel (33) is removably attached to the vertically oriented support structure (33), wherein the skirt panel (33) extends downwardly from near the bottom (B) of the vehicle body to a predetermined height above a ground surface (G), wherein the skirt panel (33) is configured to extend over the exterior sides of the vertically oriented support structure (57) to cover the vertically oriented support structure (57) and direct airflow around vehicle components and reduce aerodynamic resistance; and
**characterized in that** the side skirt device further comprises a storage structure (69), wherein the storage structure (69) is removably attached to the structural beam (16; 17) by the clamp (58) without altering the structural beam (16; 17).
